# EUROPÄISCHE PATENTSCHRIFT

(11) **EP 3 616 968 B1**
(45) Veröffentlichungstag und Bekanntmachung des Hinweises auf die Patenterteilung: **02.11.2022**
(21) Anmeldenummer: 19192510.6
(22) Anmeldetag: 20.08.2019
(51) Int. Cl.: B60R 11/00, B60K 37/04, B60R 7/06, B60R 11/02

(54) **HALTEVORRICHTUNG FÜR EIN MOBILES ENDGERÄT IN EINEM KRAFTFAHRZEUG**
HOLDING DEVICE FOR A MOBILE TERMINAL IN A MOTOR VEHICLE
DISPOSITIF DE RETENUE POUR UN TERMINAL MOBILE DANS UN VÉHICULE AUTOMOBILE

(30) Priorität: 30.08.2018 DE 102018121214
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Maier, Marius, 80999 München (DE); Möller, Andreas, 36145 Hofbieber (DE); Schippling, Marc, 81245 München (DE); Kupitza, Rudolf, 82275 Emmering (DE)
(74) Vertreter: v. Bezold & Partner Patentanwälte - PartG mbB

(56) Entgegenhaltungen:
- DE-A1-102014 008 810
- DE-A1-102015 207 244
- FR-A1- 3 012 566

## Beschreibung

Die Erfindung betrifft eine Haltevorrichtung für ein mobiles Endgerät zum Einbau in ein Armaturenbrett eines Kraftfahrzeugs, vorzugsweise eines Nutzfahrzeugs.

In Kraftfahrzeugen, wie beispielsweise Nutzfahrzeugen, können unterschiedliche mobile Endgeräte mitgeführt werden, die in unterschiedlichen Situationen einsehbar und/oder bedienbar sein müssen. Speziell bei der Verwendung von Nutzfahrzeugen können dies mobile Endgeräte sein, die hinsichtlich der Erfüllung der Arbeitsaufgabe des Fahrzeugfahrers von erheblicher Bedeutung sind. Hierbei sind neben rein kommunikativen auch bspw. logistische Aufgaben zu erwähnen. Oftmals sind bei Fahrtunterbrechungen Eingaben oder Abfragen durchzuführen. Um eine anwenderfreundliche Bedienung zu ermöglichen, ist es vorteilhaft, dass derartige Geräte so gehalten werden, dass sie vom Fahrersitz aus ergonomisch vom Fahrer des Kraftfahrzeugs erreichbar sind.

Die DE 10 2011 053 607 A1 offenbart einen Halter für ein elektronisches Gerät, bestehend aus einer Verankerungseinheit, einer Verschiebeeinheit und einem Aufnahmebereich für das elektronische Gerät, der von mindestens zwei Klemmschienen begrenzt ist.

Die DE 10 2015 222 685 A1 offenbart eine Ablage zur Aufnahme wenigstens eines mobilen Endgerätes mit einem Akkumulator in einem Kraftfahrzeug. Die Ablage weist eine Ablagefläche, auf welcher ein mobiles Endgerät ablegbar ist, und eine drahtlose Ladeeinheit zur drahtlosen Ladung des Akkumulators eines auf der Ablagefläche positionierten mobilen Endgerätes auf.

Die FR 3 012 566 A1, die DE 10 2015 207 244 A1 und die DE 10 2014 008 810 A1 offenbaren ebenfalls Haltevorrichtungen für mobile Endgeräte.

Der Erfindung liegt die Aufgabe zu Grunde, eine alternative und/oder verbesserte Haltvorrichtung für ein mobiles Endgerät in einem Kraftfahrzeug zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine Haltevorrichtung für ein mobiles Endgerät (z. B. mit vorzugsweise berührungsempfindlichen Bildschirm; z. B. Smartphone, Tablet-Computer und/oder Navigationsgerät) zum Einbau in ein Armaturenbrett eines Kraftfahrzeugs, vorzugsweise eines Nutzfahrzeugs. Die Haltevorrichtung weist ein erstes Klemmelement und ein zweites Klemmelement auf. Das zweite Klemmelement liegt dem ersten Klemmelement gegenüber und ist relativ zu dem ersten Klemmelement (z. B. translatorisch) verschiebbar (z. B. manuell). Durch Verschieben des zweiten Klemmelements weg von dem ersten Klemmelement kann sich ein Aufnahmespalt zwischen dem ersten Klemmelement und dem zweiten Klemmelement bilden, in dem das mobile Endgerät von unten (z. B. nur entlang eines Rahmenabschnitts des mobilen Endgeräts) zwischen dem ersten Klemmelement und dem zweiten Klemmelement (z. B. vorne und hinten) zum Halten des mobilen Endgeräts einklemmbar ist.

Die Nutzer von Kraftfahrzeugen haben oftmals den Bedarf, mobile Endgeräte in diesen Fahrzeugen bei Stillstand des Kraftfahrzeugs im Rahmen gesetzlicher Vorgaben zu nutzen. Aufgrund des begrenzt vorhandenen Bauraumes und möglicher Einschränkungen der direkten Sicht aus dem Fahrzeug kann es vorteilhaft sein, ein mobiles Endgerät nur situationsbedingt während z. B. eines Fahrzeugstillstandes für den Fahrer einsehbar oder bedienbar zu halten. Während des Fahrbetriebs kann das mobile Endgerät anderweitig abgelegt werden. Der direkte Umgebungsbereich des Fahrzeuglenkers ist mit Bedienelementen und Anzeigegeräten, die zur Fahrzeugbedienung erforderlich sind, belegt. Bereiche oberhalb der Instrumententafel und des Armaturenbretts liegen meist im direkten Sichtbereich des Fahrers bei einer Blickrichtung aus dem Fahrzeug nach vorne. Durch eine schnelle und flexible Aufnahme eines mobilen Endgeräts von unten in dem Aufnahmespalt der Haltevorrichtung gemäß der vorliegenden Erfindung kann während Fahrtpausen eine gute Einsehbarkeit und Bedienbarkeit sichergestellt werden. Die Fahrzeugbedienung und Fahrersicht während der Fahrt werden nicht eingeschränkt, da das mobile Endgerät während der Fahrt einfach aus der Haltevorrichtung entnommen und z. B. auf der Haltevorrichtung selbst flach abgelegt werden kann.

Zweckmäßig kann das erste Klemmelement unten an einer Vorderseite eines (z. B. im Wesentlichen rechteckigen) Rahmens des mobilen Endgeräts anliegen und/oder das zweite Klemmelement kann unten an einer Rückseite eines (z. B. im Wesentlichen rechteckigen) Rahmens des mobilen Endgeräts anliegen.

In einem Ausführungsbeispiel weist die Haltevorrichtung ferner eine Stützfläche auf, die den Aufnahmespalt nach unten begrenzt, zum Abstützen des mobilen Endgeräts im Aufnahmespalt von unten.

In einer Weiterbildung ist die Stützfläche an einer Oberseite einer Bodenplatte der Haltevorrichtung angeordnet. Es ist möglich, dass das zweite Klemmelement verschiebbar auf der Stützfläche aufliegt.

In einem weiteren Ausführungsbeispiel ist die Stützfläche unbeweglich und/oder fixiert. Alternativ oder zusätzlich ist die Stützfläche an dem ersten Klemmelement, vorzugsweise von unten, befestigt.

In einer Ausführungsform ist das zweite Klemmelement in einer Richtung zu dem ersten Klemmelement, vorzugsweise elastisch, vorgespannt, vorzugsweise federvorgespannt.

In einer weiteren Ausführungsform weist das erste Klemmelement und/oder das zweite Klemmelement eine angeschrägte Klemmfläche (z. B. schräg zu einer Horizontalachse und zu einer Vertikalachse) zum geneigten Halten des mobilen Endgeräts auf. Der Fahrer des Nutzfahrzeugs kann somit bei einer Sichtachse schräg von oben direkt auf einen Bildschirm des mobilen Endgeräts blicken.

In einer weiteren Ausführungsform steht ein Benutzerbedienabschnitt des zweiten Klemmelements zum manuellen Verschieben des zweiten Klemmelements über das erste Klemmelement hinaus über (z. B. in einem Bereich zwischen größer als 0 cm und 1 cm, z. B. rund 0,5 cm), vorzugsweise in einer Vertikalrichtung. Die Haltevorrichtung kann somit einhändig bedient werden, in dem das zweite Klemmelement manuell verschoben und beabstandet zu dem ersten Klemmelement gehalten wird. Mit der anderen Hand kann das mobile Endgerät dann bequem in den Aufnahmespalt zwischen den Klemmelementen positioniert werden.

In einer Weiterbildung ist der Benutzerbedienabschnitt als ein oberer Flächenabschnitt einer Klemmfläche des zweiten Klemmelements ausgebildet.

In einer Ausführungsvariante weist der Aufnahmespalt eine Höhe von kleiner oder gleich 2,5 cm, vorzugsweise kleiner oder gleich 2 cm oder 1,5 cm, auf. Alternativ oder zusätzlich weist der Aufnahmespalt eine variable Breite in Abhängigkeit von einer Position des zweiten Klemmelements relativ zum ersten Klemmelement auf, vorzugsweise in einem Bereich zwischen 0 cm und 3 cm. Damit kann eine Vielzahl gängiger mobiler Endgeräte in der Haltevorrichtung flexibel gehalten werden.

Gemäß einer ersten Alternative der Erfindung bildet die Haltevorrichtung bei Nichtgebrauch (z. B. ohne Halten eines mobilen Endgeräts im Aufnahmespalt), in dem das zweite Klemmelement am ersten Klemmelement anliegt, eine flächige Ablagemöglichkeit an einer Oberseite der Haltevorrichtung. Die Ablagemöglichkeit kann bspw. zur flachen Ablage des mobilen Endgeräts selbst während der Fahrt des Kraftfahrzeugs außerhalb des Sichtbereichs des Fahrers oder für Zeitschriften, Notizen o. ä. verwendet werden.

Gemäß einer zweiten, mit der ersten kombinierbaren Alternative der Erfindung ist am zweiten Klemmelement ein, vorzugsweise flächiger und/oder im Wesentlichen horizontaler, Ablagebereich angebracht.

In einer Weiterbildung ist der Ablagebereich gemeinsam mit dem zweiten Klemmelement verschiebbar und/oder integral-einstückig mit dem zweiten Klemmelement ausgebildet und/oder an einer dem ersten Klemmelement gegenüberliegenden Seite des zweiten Klemmelements angeordnet.

Gemäß der zweiten Alternative taucht der Ablagebereich zumindest teilweise in einen Aufnahmeraum ein (z. B. unterhalb einer Abdeckung der Haltevorrichtung und/oder des Armaturenbretts), wenn das zweite Klemmelement weg von dem ersten Klemmelement verschoben wird. In einem weiteren Ausführungsbeispiel ist der Ablagebereich von oben (z. B. nur) vollständig zugänglich, wenn das zweite Klemmelement in Anlage mit dem ersten Klemmelement ist und/oder bei Nichtgebrauch der Haltevorrichtung.

In einer Ausführungsform ist eine Klemmfläche des ersten Klemmelements und/oder des zweiten Klemmelements elastisch und/oder nachgiebig und/oder nicht-abrasiv und/oder oberflächenschonend zum beschädigungsfreien (z. B. kratzerfreien) Halten des mobilen Endgeräts ausgebildet. Alternativ oder zusätzlich ist eine Klemmfläche des ersten Klemmelements und/oder des zweiten Klemmelements zumindest teilweise gummiert, mit einem Stoff (z. B. Filz) bezogen und/oder mit einem Softlack beschichtet.

In einer weiteren Ausführungsform ist ferner eine elektrische oder elektronische Schnittstelle (z. B. USB-Port) für das mobile Endgerät umfasst. Vorzugsweise ist ein Ladekabel des mobilen Endgeräts an die Schnittstelle zum Aufladen des mobilen Endgeräts anschließbar und/oder ein Datenkabel des mobilen Endgeräts an die Schnittstelle zum Datenaustausch anschließbar. Es ist möglich, dass die Schnittstelle zum Laden und/oder Datenaustausch mit dem mobilen Endgerät ausgebildet ist.

In einer Weiterbildung ist die Schnittstelle so angeordnet, dass sie unabhängig von einer Relativposition des zweiten Klemmelements zum ersten Klemmelement zugänglich ist und/oder benachbart zu (z. B. seitlich neben) dem ersten Klemmelement, dem zweiten Klemmelement und/oder dem Aufnahmespalt angeordnet ist.

In einem Ausführungsbeispiel ist das erste Klemmelement fixiert und/oder unbeweglich.

In einem weiteren Ausführungsbeispiel ist das erste Klemmelement und/oder das zweite Klemmelement länglich und/oder als eine Klemmleiste ausgebildet.

Die Erfindung ist auch auf ein Kraftfahrzeug, vorzugsweise ein Nutzfahrzeug (z. B. Lastkraftwagen oder Omnibus), gerichtet, mit einem Armaturenbrett aufweisend eine Haltevorrichtung wie hierin offenbart, vorzugsweise an einer Oberseite des Armaturenbretts.

Zweckmäßig kann die Haltevorrichtung von einer Unterseite des Armaturenbretts aus an dem Armaturenbrett, zum Beispiel mittels Schrauben, lösbar befestigt sein, z. B. in einer Aussparung des Armaturenbretts.

Weitere Einzelheiten und Vorteile der Erfindung werden im Folgenden unter Bezug auf die beigefügten Zeichnungen beschrieben. Es zeigen:
- Figur 1: eine perspektivische Ansicht auf eine beispielhafte Vorrichtung zum Halten eines mobilen Endgeräts gemäß der vorliegenden Erfindung; und
- Figur 2: eine perspektivische Schnittansicht durch die beispielhafte Vorrichtung zum Halten eines mobilen Endgeräts.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

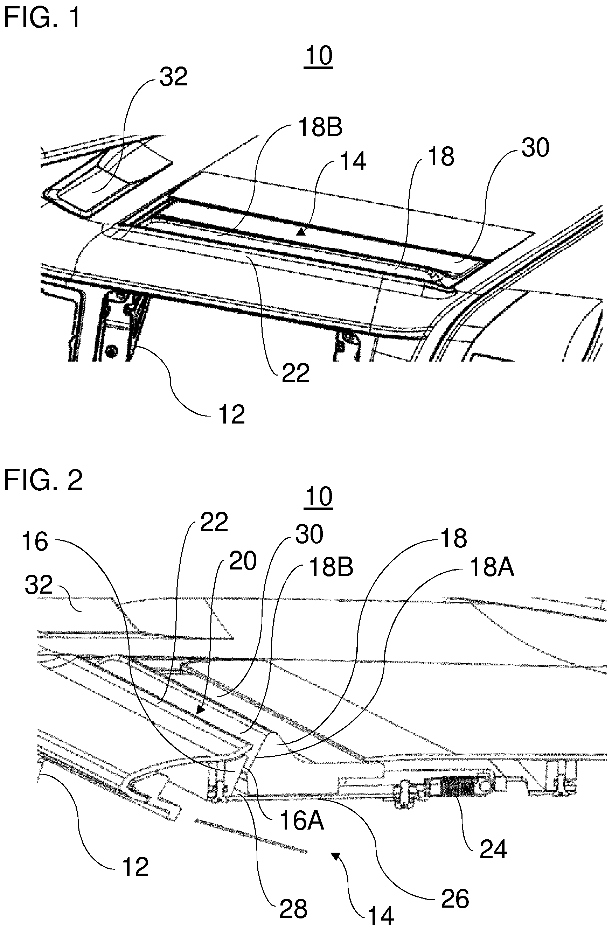

Die Figuren 1 und 2 zeigen einen Abschnitt eines Armaturenbretts 10 eines Kraftfahrzeugs. Das Kraftfahrzeug kann beispielsweise ein Nutzfahrzeug, zum Beispiel ein Lastkraftwagen oder ein Omnibus, sein. Im Armaturenbrett 10 können eine Instrumententafel und verschiedene andere Geräte zur Bedienung für den Fahrer oder Beifahrer des Kraftfahrzeugs angeordnet sein. Beispielsweise kann das Armaturenbrett 10 an einer Vorderseite einen Einbaurahmen 12 für ein Radio und/oder Navigationsgerät aufweisen. Das Armaturenbrett 10 kann bezüglich einer Vorwärtsfahrtrichtung des Kraftfahrzeugs vor einem Fahrersitz und einem Beifahrersitz angeordnet sein. Das Armaturenbrett 10 kann in einer Querrichtung des Kraftfahrzeugs ausgerichtet sein. Der in den Figuren 1 und 2 abgebildete Abschnitt des Armaturenbretts 10 kann insbesondere benachbart zu einer Lenkvorrichtung (zum Beispiel Lenkrad) des Kraftfahrzeugs angeordnet sein.

Das Armaturenbrett 10 weist eine Haltevorrichtung 14 zum Halten eines mobilen Endgeräts (nicht dargestellt) auf. Das mobile Endgerät kann beispielsweise ein Smartphone, ein Tablet-Computer oder ein Navigationsgerät sein. Die Haltevorrichtung 14 ist insbesondere an einer Oberseite des Armaturenbretts 10 in einer Aussparung in dem Armaturenbrett 10 eingebaut. Die Haltevorrichtung 14 kann von einer Unterseite des Armaturenbretts 10 aus an dem Armaturenbrett 10, zum Beispiel mittels Schrauben, lösbar befestigt sein.

Die Haltevorrichtung 14 weist ein erstes Klemmelement 16 und ein zweites Klemmelement 18 auf. Das erste Klemmelement 16 und das zweite Klemmelement 18 liegen einander gegenüber. Zwischen den Klemmelementen 16 und 18 kann ein Aufnahmespalt 20 zur Aufnahme des mobilen Endgeräts gebildet werden. Die Klemmelemente 16, 18 können sich beispielsweise länglich erstrecken und/oder als Klemmleisten ausgebildet sein. In der dargestellten Ausführungsform erstrecken sich die Klemmelemente 16, 18 im Wesentlichen parallel zu einer Querrichtung des Kraftfahrzeugs, in anderen Worten, parallel zu einer Längsrichtung des Armaturenbretts 10. Andere Formen und/oder Ausrichtungen der Klemmelemente sind ebenso möglich.

Das erste Klemmelement 16 ist unbeweglich an dem Armaturenbrett 10 befestigt. Wie dargestellt ist, kann sich das erste Klemmelement 16, vorzugsweise optisch ansprechend, unterhalb eines längs verlaufenden Vorsprungs 22 des Armaturenbretts 10 angeordnet sein. Es ist möglich, dass das erste Klemmelement 16 von unten an dem Vorsprung 22 lösbar befestigt ist, zum Beispiel mittels einer oder mehrerer Schrauben. Der Vorsprung 22 kann in einer Richtung zu dem zweiten Klemmelement 18 über das erste Klemmelement 16 überstehen.

Das zweite Klemmelement 18 ist translatorisch verschiebbar relativ zu dem ersten Klemmelement 16. Zum Einspannen oder Einklemmen des mobilen Endgeräts kann das zweite Klemmelement 18 manuell weg von dem ersten Klemmelement 16 verschoben werden. Der Aufnahmespalt 20 bildet sich dann zwischen den Klemmelementen 16 und 18 aus. Das mobile Endgerät kann in den Aufnahmespalt 20 eingeschoben und zwischen den Klemmelementen 16 und 18 eingeklemmt werden.

Das zweite Klemmelement 18 kann beispielsweise in einem Bereich bis zu ca. 3 cm längsverschiebbar sein. Damit kann der Aufnahmespalt 20 eine variable Breite von bis zu ca. 3 cm aufweisen. Damit können alle gängigen mobilen Endgeräte, die typischerweise eine Rahmendicke von unter 1 cm aufweisen, durch die Haltevorrichtung 14 in dem Aufnahmespalt 20 gehalten werden. Es kann auch möglich sein, Bücher, Bilder, Fotos o.ä. in der Haltevorrichtung 14 zu halten.

Das zweite Klemmelement 18 kann in einer Richtung zu dem ersten Klemmelement 16 zum Beispiel mittels eines elastischen Elements 24 vorgespannt sein. Das elastische Element 24 kann beispielsweise eine Feder sein, z. B. eine Schraubenfeder - wie dargestellt ist. Das elastische Element 24 kann von außen nicht sichtbar unterhalb einer Abdeckung im Armaturenbrett 10 angeordnet sein. Beispielsweise kann das elastische Element 24 in einer Vorwärtsfahrtrichtung des Kraftfahrzeugs betrachtet vor dem zweiten Klemmelement 18 angeordnet sein. Beispielsweise kann das elastische Element 24 eine Vorspannung entgegen einer Vorwärtsfahrtrichtung des Kraftfahrzeugs bewirken. Die Aufnahme für das zweite Klemmelement 18 und/oder das elastische Element 24 können beispielsweise von unten an einem Abschnitt des Armaturenbretts 10 befestigt sein, der dem Vorsprung 22 gegenüberliegt.

Bei Gebrauch der Haltevorrichtung 14, das heißt wenn ein mobiles Endgerät in dem Aufnahmespalt 20 positioniert ist, ist das zweite Klemmelement 18 beabstandet zu dem ersten Klemmelement 16 zum Bilden des Aufnahmespalts 20 angeordnet. Bei Nichtgebrauch der Haltevorrichtung 14 kann das zweite Klemmelement 18 an dem ersten Klemmelement 16 anliegen.

Die Haltevorrichtung 14 kann ferner eine Bodenplatte 26 aufweisen. Die Bodenplatte 26 kann unterhalb des ersten Klemmelements 16 und des zweiten Klemmelement 18 angeordnet sein. Das zweite Klemmelement 18 kann auf einer Oberseite der Bodenplatte 26 längsverschieblich abgestützt sein. Die Bodenplatte 26 kann ebenfalls von unten an dem Armaturenbrett 10 befestigt sein, beispielsweise an dem Vorsprung 22 und an dem dem Vorsprung 22 gegenüberliegenden Abschnitt des Armaturenbretts 10.

Die Bodenplatte 26 kann auf ihrer Oberseite eine Stützfläche 28 aufweisen. Die Stützfläche 28 kann den Aufnahmespalt 20 nach unten hin begrenzen. Der Aufnahmespalt 20 kann somit an gegenüberliegenden Seiten von den Klemmelementen 16 und 18 und daran angrenzend nach unten hin von der Stützfläche 28 begrenzt sein. Beim Einstecken des mobilen Endgeräts in den Aufnahmespalt 20 kann die Stützfläche 28 das mobile Endgerät von unten abstützen.

Der Aufnahmespalt 20 kann beispielsweise eine Tiefe bzw. Höhe von weniger als ca. 2,5 cm, vorzugsweise ca. 1,5 cm, aufweisen. Im Aufnahmespalt 20 kann das mobile Endgerät an einer einzigen Rahmenseite des mobilen Endgeräts, zum Beispiel Rahmenlängsseite oder Rahmenquerseite, zwischen den Klemmelementen 16 und 18 eingeklemmt werden. Das mobile Endgerät kann von unten her in dem Aufnahmespalt 20 gehalten sein. Beispielweise kann das erste Klemmelement 16 unten an einem rechteckigen Rahmen an einer Vorderseite des mobilen Endgeräts anliegen. Das zweite Klemmelement 18 kann unten an dem rechteckigen Rahmen an einer Rückseite des mobilen Endgeräts anliegen.

Die Klemmelemente 16 und 18 können geneigte oder angeschrägte Klemmflächen 16A und 18A aufweisen. Die Klemmflächen 16A und 18A sind einander zugewandt. Die Klemmflächen 16A und 18 A können beispielsweise bezüglich einer Vertikalrichtung geneigt sein (zum Beispiel zwischen 0° und 45°). Somit kann das mobile Endgerät zwischen den Klemmflächen 16A und 18A in geneigter Haltung eingeklemmt werden.

Es ist möglich, dass das zweite Klemmelement 18 einem Benutzerbedienabschnitt 18B aufweist. Der Benutzerbedienabschnitt 18B dient als Druckfläche für eine Hand eines Benutzers zum Verschieben des zweiten Klemmelements 18 weg vom ersten Klemmelement 16. Der Benutzerbedienabschnitt 18B ist in einer Vertikalrichtung überstehend über den Vorsprung 22 und das erste Klemmelement 16 angeordnet. Somit ist der Benutzerbedienabschnitt 18B auch zugänglich, wenn die Klemmelemente 16 und 18 bei Nichtgebrauch der Haltevorrichtung 14 aneinander anliegen. Wie in Figur 2 dargestellt ist, kann der Benutzerbedienabschnitt 18B als ein oberer Flächenabschnitt der Klemmfläche 18A ausgebildet sein. Der Benutzerbedienabschnitt 18B kann sich entlang einer gesamten Länge der Klemmfläche 18A erstrecken.

Bei Nichtgebrauch der Haltevorrichtung 14, wenn die zweite Klemmleiste 18 an dem ersten Klemmelement 16 anliegt, bietet die Haltevorrichtung 14 an deren Oberseite eine Ablagemöglichkeit beispielsweise für Zeitschriften, Bücher oder Geräte. Die Ablagemöglichkeit wird vorzugsweise durch einen flächigen und/oder im Wesentlichen horizontalen Ablagebereich 30 gebildet. Der Ablagebereich 30 ist an der zweiten Klemmleiste 18 angebracht. Der Ablagebereich 30 ist an einer dem ersten Klemmelement 16 gegenüberliegenden Seite der zweiten Klemmleiste 18 angeordnet. Bezüglich einer Vorwärtsfahrtrichtung des Kraftfahrzeugs ist der Ablagebereich 30 vor der zweiten Klemmleiste 18 angeordnet. Der Ablagebereich 30 kann integral-einstückig mit der zweiten Klemmleiste 18 ausgebildet sein.

Bei Gebrauch der Haltevorrichtung 14, wenn das zweite Klemmelement 18 weg von dem ersten Klemmelement 16 zur Aufnahme eines mobilen Endgeräts verschoben ist, taucht der Ablagebereich 30 teilweise in einen Aufnahmeraum im Armaturenbrett 10 unterhalb einer flächigen Abdeckung ein. Bei Nichtgebrauch der Haltevorrichtung 14 ist der Ablagebereich 30 von oben her vollständig zugänglich, um Zeitschriften usw. auf diesem abzulegen. Somit kann die Haltevorrichtung 14 bei Nichtgebrauch, zum Beispiel während der Fahrt des Kraftfahrzeugs, als eine leicht zugängliche Ablagemöglichkeit verwendet werden. Andererseits kann die Haltevorrichtung 14 zum flexiblen und temporären Halten eines mobilen Endgeräts, zum Beispiel während einer Fahrtunterbrechung, gehalten werden, und zwar im direkten Sichtbereich des Fahrers oder Beifahrers des Kraftfahrzeugs. Bei Nichtgebrauch des mobilen Endgeräts kann dieses einfach aus der Haltevorrichtung 14 entnommen werden, und somit den Sichtbereich des Fahrers bei der Fahrt nicht beschränken.

Es ist möglich, dass Mittel zur Oberflächenschonung des mobilen Endgeräts, das zwischen den Klemmelementen 16 und 18 eingeklemmt ist, vorgesehen sind. Zum Beispiel können die Klemmflächen 16A und 18A elastisch, nachgiebig, nicht-abrasiv (zum Beispiel weich) und/oder anderweitig oberflächenschonend ausgebildet sein. Beispielsweise können die Klemmflächen 16A und 18A zumindest teilweise gummiert, mit einem Filz bezogen und/oder mit einem Softlack beschichtet sein.

In unmittelbarer Umgebung zu den Klemmelementen 16 und 18 kann ferner eine elektrische oder elektronische Schnittstelle 32 für das mobile Endgerät angeordnet sein. Z. B. kann das mobile Endgerät an der Schnittstelle 32 mittels eines Ladekabels, das an das mobile Endgerät und die Schnittstelle 32angeschlossen ist, geladen werden. Z. B. kann auch ein Datenaustausch zwischen dem mobilen Endgerät und einer Verarbeitungseinheit des Kraftfahrzeugs mittels eines Datenkabels, das an das mobile Endgerät und die Schnittstelle 32 angeschlossen ist, erfolgen. Die Schnittstelle 32 kann beispielsweise einen oder mehrere USB-Ports aufweisen. Die Schnittstelle 32 kann dabei so seitlich neben der Haltevorrichtung 14 angeordnet sein, dass sie unabhängig von einem Gebrauch oder Nichtgebrauch der Haltevorrichtung 14 zugänglich ist. So kann beispielsweise bei Gebrauch der Haltevorrichtung 14 ein durch die Haltevorrichtung 14 gehaltenes mobiles Endgerät mittels der Schnittstelle 32 elektrisch geladen werden. Es ist beispielsweise auch möglich, bei Nichtgebrauch der Haltevorrichtung 14 ein auf dem Ablagebereich 30 positioniertes mobiles Endgerät durch die Schnittstelle 32 elektrisch zu laden.

### Bezugszeichenliste

- 10: Armaturenbrett
- 12: Einbaurahmen
- 14: Haltevorrichtung
- 16: Erstes Klemmelement
- 16A: Klemmfläche
- 18: Zweites Klemmelement
- 18A: Klemmfläche
- 18B: Benutzerbedienabschnitt
- 20: Aufnahmespalt
- 22: Vorsprung
- 24: Elastisches Element
- 26: Bodenplatte
- 28: Stützfläche
- 30: Ablagebereich
- 32: Elektrische oder elektronische Schnittstelle

## Patentansprüche

1. Haltevorrichtung (14) für ein mobiles Endgerät zum Einbau in ein Armaturenbrett (10) eines Kraftfahrzeugs, vorzugsweise eines Nutzfahrzeugs, aufweisend:
ein erstes Klemmelement (16); und
ein zweites Klemmelement (18), das dem ersten Klemmelement (16) gegenüberliegt und relativ zu dem ersten Klemmelement (16) verschiebbar ist,
wobei durch Verschieben des zweiten Klemmelements (18) weg von dem ersten Klemmelement (16) ein Aufnahmespalt (20) zwischen dem ersten Klemmelement (16) und dem zweiten Klemmelement (18) ausbildbar ist, in dem das mobile Endgerät von unten zwischen dem ersten Klemmelement (16) und dem zweiten Klemmelement (18) zum Halten des mobilen Endgeräts einklemmbar ist,
**dadurch gekennzeichnet,**
**dass** die Haltevorrichtung (14) bei Nichtgebrauch, in dem das zweite Klemmelement (18) am ersten Klemmelement (16) anliegt, eine flächige Ablagemöglichkeit an einer Oberseite der Haltevorrichtung (14) bildet; und/oder
**dass** am zweiten Klemmelement (18) ein, vorzugsweise flächiger und/oder im Wesentlichen horizontaler, Ablagebereich (30) angebracht ist und der Ablagebereich (30) zumindest teilweise in einen Aufnahmeraum eintaucht, wenn das zweite Klemmelement (18) weg von dem ersten Klemmelement (16) verschoben wird.

2. Haltevorrichtung (14) nach Anspruch 1, ferner aufweisend:
eine Stützfläche (28), die den Aufnahmespalt (20) nach unten begrenzt, zum Abstützen des mobilen Endgeräts im Aufnahmespalt (20) von unten,
wobei vorzugsweise:
die Stützfläche (28) an einer Oberseite einer Bodenplatte (26) der Haltevorrichtung (14) angeordnet ist; und/oder
das zweite Klemmelement (18) verschiebbar auf der Stützfläche (28) aufliegt; und/oder
die Stützfläche (28) unbeweglich und/oder fixiert ist; und/oder
die Stützfläche (28) an dem ersten Klemmelement (16), vorzugsweise von unten, befestigt ist.

3. Haltevorrichtung (14) nach Anspruch 1 oder Anspruch 2, wobei:
das zweite Klemmelement (18) in einer Richtung zu dem ersten Klemmelement (16), vorzugsweise elastisch, vorgespannt, vorzugsweise federvorgespannt, ist.

4. Haltevorrichtung (14) nach einem der vorherigen Ansprüche, wobei:
das erste Klemmelement (16) und/oder das zweite Klemmelement (18) eine angeschrägte Klemmfläche (16A, 18A) zum geneigten Halten des mobilen Endgeräts aufweist.

5. Haltevorrichtung (14) nach einem der vorherigen Ansprüche, wobei:
ein Benutzerbedienabschnitt (18B) des zweiten Klemmelements (18) zum manuellen Verschieben des zweiten Klemmelements (18) über das erste Klemmelement (16) hinaus übersteht, vorzugsweise in einer Vertikalrichtung.

6. Haltevorrichtung (14) nach Anspruch 5, wobei:
der Benutzerbedienabschnitt (18B) als ein oberer Flächenabschnitt einer Klemmfläche (18A) des zweiten Klemmelements (18) ausgebildet ist.

7. Haltevorrichtung (14) nach einem der vorherigen Ansprüche, wobei:
der Aufnahmespalt (20) eine Höhe von kleiner oder gleich 2,5 cm, vorzugsweise kleiner oder gleich 2 cm oder 1,5 cm, aufweist; und/oder
der Aufnahmespalt (20) eine variable Breite in Abhängigkeit von einer Position des zweiten Klemmelements (18) relativ zum ersten Klemmelement (16) aufweist, vorzugsweise in einem Bereich zwischen 0 cm und 3 cm.

8. Haltevorrichtung (14) nach einem der vorherigen Ansprüche, wobei:
der Ablagebereich (30) gemeinsam mit der zweiten Klemmelement (18) verschiebbar ist; und/oder
der Ablagebereich (30) integral-einstückig mit dem zweiten Klemmelement (18) ausgebildet ist; und/oder
der Ablagebereich (30) an einer dem ersten Klemmelement (16) gegenüberliegenden Seite des zweiten Klemmelements (18) angeordnet ist.

9. Haltevorrichtung (14) nach einem der vorherigen Ansprüche, wobei:
der Ablagebereich (30) von oben vollständig zugänglich ist, wenn das zweite Klemmelement (18) in Anlage mit dem ersten Klemmelement (16) ist und/oder bei Nichtgebrauch der Haltevorrichtung (14).

10. Haltevorrichtung (14) nach einem der vorherigen Ansprüche, wobei:
eine Klemmfläche (16A, 18A) des ersten Klemmelements (16) und/oder des zweiten Klemmelements (18) elastisch, nachgiebig, nicht-abrasiv und/oder oberflächenschonend zum beschädigungsfreien Halten des mobilen Endgeräts ausgebildet ist; und/oder
eine Klemmfläche (16A, 18A) des ersten Klemmelements (16) und/oder des zweiten Klemmelements (18) zumindest teilweise gummiert, mit einem Stoff bezogen und/oder mit einem Softlack beschichtet ist.

11. Haltevorrichtung (14) nach einem der vorherigen Ansprüche, ferner aufweisend:
eine elektrische oder elektronische Schnittstelle (32) für das mobile Endgerät, wobei vorzugsweise:
ein Ladekabel des mobilen Endgeräts an die Schnittstelle (32) zum Aufladen des mobilen Endgeräts anschließbar ist; und/oder
ein Datenkabel des mobilen Endgeräts an die Schnittstelle (32) zum Datenaustausch anschließbar ist; und/oder
die Schnittstelle (32) zum Laden und/oder Datenaustausch mit dem mobilen Endgerät ausgebildet ist; und/oder
die Schnittstelle (32) so angeordnet ist, dass sie unabhängig von einer Relativposition des zweiten Klemmelements (18) zum ersten Klemmelement (16) zugänglich ist; und/oder
die Schnittstelle (32) benachbart zu dem ersten Klemmelement (16), dem zweiten Klemmelement (18) und/oder dem Aufnahmespalt (20) angeordnet ist.

12. Haltevorrichtung (14) nach einem der vorherigen Ansprüche, wobei:
das erste Klemmelement (16) fixiert und/oder unbeweglich ist; und/oder
das erste Klemmelement (16) und/oder das zweite Klemmelement (18) länglich und/oder als eine Klemmleiste ausgebildet ist.

13. Kraftfahrzeug, vorzugsweise Nutzfahrzeug, mit einem Armaturenbrett (10) aufweisend eine Haltevorrichtung (14) nach einem der vorherigen Ansprüche, vorzugsweise an einer Oberseite des Armaturenbretts (10).

## Claims

1. A holding device (14) for a mobile terminal for installation into a dashboard (10) of a motor vehicle, preferably a utility vehicle, having
a first clamping element (16); and
a second clamping element (18) which is situated opposite the first element (16) and can be moved relative to the first clamping element (16),
wherein a receiving gap (20) can be formed between the first clamping element (16) and the second clamping element (18) by moving the second clamping element (18) away from the first clamping element (16), it being possible for the mobile terminal to be clamped into said receiving gap from below between the first clamping element (16) and the second clamping element (18) in order to hold the mobile terminal,
**characterized**
**in that** the holding device (14) when it is not in use, where the second clamping element (18) bears against the first clamping element (16), forms a flat storage option on a top side of the holding device (14); and/or
**in that** a, preferably flat and/or substantially horizontal, storage region (30) is made on the second clamping element (18) and the storage region (30) at least partially enters a receiving space when the second clamping element (18) is moved away from the first clamping element (16).

2. The holding device (14) according to Claim 1, further having:
a supporting surface (28), which delimits the receiving gap (20) at the bottom, in order to support the mobile terminal in the receiving gap (20) from below, wherein preferably:
the supporting surface (28) is arranged on a top side of a base plate (26) of the holding device (14); and/or
the second clamping element (18) rests on the supporting surface (28) in a movable manner; and/or
the supporting surface (28) is immobile and/or fixed; and/or
the supporting surface (28) is fastened to the first clamping element (16), preferably from below.

3. The holding device (14) according to Claim 1 or Claim 2, wherein:
the second clamping element (18) is, preferably elastically, prestressed, preferably spring-prestressed, in a direction towards the first clamping element (16).

4. The holding device (14) according to one of the preceding claims, wherein:
the first clamping element (16) and/or the second clamping element (18) has a bevelled clamping face (16A, 18A) in order to hold the mobile terminal in an inclined manner.

5. The holding device (14) as claimed in one of the preceding claims, wherein:
a user control portion (18B) of the second clamping element (18) projects beyond the first clamping element (16), preferably in a vertical direction, in order to manually move the second clamping element (18).

6. The holding device (14) according to Claim 5, wherein:
the user control portion (18B) is in the form of an upper flat portion of a clamping face (18A) of the second clamping element (18).

7. The holding device (14) according to one of the preceding claims, wherein:
the receiving gap (20) has a height of less than or equal to 2.5 cm, preferably less than or equal to 2 cm or 1.5 cm; and/or
the receiving gap (20) has a variable width depending on a position of the second clamping element (18) relative to the first clamping element (16), preferably in a range of between 0 cm and 3 cm.

8. The holding device (14) according to one of the preceding claims, wherein:
the storage region (30) can be moved together with the second clamping element (18); and/or
the storage region (30) is formed integrally in one piece with the second clamping element (18); and/or
the storage region (30) is arranged on a side of the second clamping element (18) situated opposite the first clamping element (16).

9. The holding device (14) according to one of the preceding claims, wherein:
the storage region (30) is fully accessible from above when the second clamping element (18) is in contact with the first clamping element (16) and/or when the holding device (14) is not in use.

10. The holding device (14) according to one of the preceding claims, wherein
a clamping face (16A, 18A) of the first clamping element (16) and/or of the second clamping element (18) is elastic, flexible, non-abrasive and/or protects the surface in order to hold the mobile terminal without damage; and/or
a clamping face (16A, 18A) of the first clamping element (16) and/or of the second clamping element (18) is at least rubberized, covered with a substance and/or coated with a soft-touch coating.

11. The holding device (14) according to one of the preceding claims, further having:
an electrical or electronic interface (32) for the mobile terminal, wherein preferably:
a charging cable of the mobile terminal can be connected to the interface (32) in order to charge the mobile terminal; and/or
a data cable of the mobile terminal can be connected to the interface (32) in order to exchange data; and/or
the interface (32) is formed in order to charge and/or exchange data with the mobile terminal; and/or
the interface (32) is arranged such that it is accessible independently of a position of the second clamping element (18) relative to the first clamping element (16); and/or
the interface (32) is arranged adjacent to the first clamping element (16), the second clamping element (18) and/or the receiving gap (20).

12. The holding device (14) according to one of the preceding claims, wherein:
the first clamping element (16) is fixed and/or immobile; and/or
the first clamping element (16) and/or the second clamping element (18) are elongate and/or in the form of a clamping strip.

13. A motor vehicle, preferably utility vehicle, comprising a dashboard (10) having a holding device (14) according to one of the preceding claims, preferably on a top side of the dashboard (10).

## Revendications

1. Dispositif de retenue (14) destiné à un terminal mobile destiné à être installé dans un tableau de bord (10) d'un véhicule automobile, de préférence d'un véhicule utilitaire, ledit dispositif de retenue comportant :
un premier élément de serrage (16) ; et
un deuxième élément de serrage (18) qui est opposé au premier élément de serrage (16) et qui peut coulisser par rapport au premier élément de serrage (16),
un espace de réception (20) pouvant être formé entre le premier élément de serrage (16) et le deuxième élément de serrage (18) par coulissement du deuxième élément de serrage (18) pour l'écarter du premier élément de serrage (16), espace de réception dans lequel le terminal mobile peut être serré depuis le bas entre le premier élément de serrage (16) et le deuxième élément de serrage (18) afin de retenir le terminal mobile,
**caractérisé en ce que**
lorsqu'il n'est pas utilisé, le deuxième élément de serrage (18) est alors en appui contre le premier élément de serrage (16), le dispositif de retenue (14) forme une possibilité de stockage sensiblement bidirectionnelle sur un côté supérieur du dispositif de retenue (14) ; et/ou
une zone de stockage (30) de préférence sensiblement bidirectionnelle et/ou sensiblement horizontale est fixée au deuxième élément de serrage (18) et la zone de stockage (30) plonge au moins partiellement dans un espace de réception lorsque le deuxième élément de serrage (18) est coulissé afin d'être écarté du premier élément de serrage (16).

2. Dispositif de retenue (14) selon la revendication 1, comportant en outre :
une surface de support (28) qui délimite l'espace de réception (20) vers le bas et qui est destinée à supporter le terminal mobile dans l'espace de réception (20) depuis le bas,
de préférence :
la surface de support (28) étant disposée sur un côté supérieur d'une plaque de fond (26) du dispositif de retenue (14) ; et/ou
le deuxième élément de serrage (18) étant en appui sur la surface de support (28) de manière à pouvoir coulisser ; et/ou
la surface de support (28) étant immobile et/ou fixe ; et/ou
la surface de support (28) étant fixée au premier élément de serrage (16), de préférence depuis le bas.

3. Dispositif de retenue (14) selon la revendication 1 ou la revendication 2,
le deuxième élément de serrage (18) étant précontraint, de préférence élastiquement, de préférence par ressort, en direction vers le premier élément de serrage (16).

4. Dispositif de retenue (14) selon l'une des revendications précédentes,
le premier élément de serrage (16) et/ou le deuxième élément de serrage (18) comportant une surface de serrage biseautée (16A, 18A) destinée à maintenir en biais le terminal mobile.

5. Dispositif de retenue (14) selon l'une des revendications précédentes,
une portion (18B) d'actionnement par un utilisateur du deuxième élément de serrage (18) afin de faire coulisser manuellement le deuxième élément de serrage (18) faisant saillie du premier élément de serrage (16), de préférence dans une direction verticale.

6. Dispositif de retenue (14) selon la revendication 5,
la portion (18B) d'actionnement par un utilisateur étant conçue comme une portion de surface supérieure d'une surface de serrage (18A) du deuxième élément de serrage (18).

7. Dispositif de retenue (14) selon l'une des revendications précédentes,
l'espace de réception (20) ayant une hauteur inférieure ou égale à 2,5 cm, de préférence inférieure ou égale à 2 cm ou 1,5 cm ; et/ou
l'espace de réception (20) ayant une largeur variable en fonction d'une position du deuxième élément de serrage (18) par rapport au premier élément de serrage (16), de préférence dans une plage comprise entre 0 cm et 3 cm.

8. Dispositif de retenue (14) selon l'une des revendications précédentes,
la zone de stockage (30) pouvant coulisser conjointement avec le deuxième élément de serrage (18) ; et/ou
la zone de stockage (30) étant conçue en venue de matière avec le deuxième élément de serrage (18) ; et/ou
la zone de stockage (30) étant disposée sur un côté du deuxième élément de serrage (18) qui est opposé au premier élément de serrage (16).

9. Dispositif de retenue (14) selon l'une des revendications précédentes,
la zone de stockage (30) étant entièrement accessible depuis le haut lorsque le deuxième élément de serrage (18) est en appui sur le premier élément de serrage (16) et/ou lorsque le dispositif de retenue (14) n'est pas utilisé.

10. Dispositif de retenue (14) selon l'une des revendications précédentes,
une surface de serrage (16A, 18A) du premier élément de serrage (16) et/ou du deuxième élément de serrage (18) étant conçue pour être élastique, flexible, non abrasive et/ou douce en surface afin de retenir sans dommage le terminal mobile ; et/ou
une surface de serrage (16A, 18A) du premier élément de serrage (16) et/ou du deuxième élément de serrage (18) étant au moins partiellement caoutchoutée, recouverte d'un tissu et/ou revêtue d'une peinture Softlack.

11. Dispositif de retenue (14) selon l'une des revendications précédentes, comportant en outre :
une interface électrique ou électronique (32) destinée au terminal mobile, de préférence :
un câble de charge du terminal mobile pouvant être raccordé à l'interface (32) pour charger le terminal mobile ; et/ou
un câble de données du terminal mobile pouvant être raccordé à l'interface (32) pour l'échange de données ; et/ou
l'interface (32) étant conçue pour charger le terminal mobile et/ou échanger des données avec celui-ci ; et/ou
l'interface (32) étant disposée de manière à être accessible quelle que soit la position relative du deuxième élément de serrage (18) par rapport au premier élément de serrage (16) ; et/ou
l'interface (32) étant disposée à côté du premier élément de serrage (16), du deuxième élément de serrage (18) et/ou de l'espace de réception (20).

12. Dispositif de retenue (14) selon l'une des revendications précédentes :
le premier élément de serrage (16) étant fixe et/ou immobile ; et/ou
le premier élément de serrage (16) et/ou le deuxième élément de serrage (18) étant allongé et/ou réalisé sous la forme d'une bande de serrage.

13. Véhicule automobile, de préférence véhicule utilitaire, comprenant un tableau de bord (10) comportant un dispositif de retenue (14) selon l'une des revendications précédentes, de préférence sur un côté supérieur du tableau de bord (10).
